# EUROPÄISCHE PATENTSCHRIFT

(11) **EP 2 756 575 B1**
(45) Veröffentlichungstag und Bekanntmachung des Hinweises auf die Patenterteilung: **13.06.2018**
(21) Anmeldenummer: 11787640.9
(22) Anmeldetag: 07.11.2011
(51) Int. Cl.: H02J 3/00, H02J 3/06

(54) **ENERGIEVERTEILNETZ**
ENERGY DISTRIBUTION NETWORK
RÉSEAU DE DISTRIBUTION D'ÉNERGIE

(43) Veröffentlichungstag der Anmeldung: 23.07.2014
(73) Patentinhaber: Siemens Aktiengesellschaft, 80333 München (DE)
(72) Erfinder: DZAFIC, Izudin, 71000 Sarajevo (BA)
(86) Internationale Anmeldenummer: PCT/EP2011/069518
(87) Internationale Veröffentlichungsnummer: WO 2013/068027

(56) Entgegenhaltungen:
- WO-A1-00/48288
- WO-A2-2009/016038

## Beschreibung

Die Erfindung bezieht sich auf ein Energieverteilnetz mit einer ersten Unterstation, die ein erstes Teilnetz des Energieverteilnetzes mit Energie versorgen kann, und mit einer zweiten Unterstation, die ein zweites Teilnetz des Energieverteilnetzes mit Energie versorgen kann.
Energieverteilnetze werden heutzutage üblicherweise zentral überwacht und gesteuert. Die zum Überwachen und Steuern üblichen Zentraleinheiten benötigen eine Vielzahl an Daten, um einen sicheren Betrieb des Energieverteilnetzes sicherzustellen. Im Falle eines Fehlers, beispielsweise im Falle eines Kurzschlusses auf einer der Leitungen des Energieverteilnetzes, können Situationen eintreten, in denen manuelle Eingriffe in die Steuerung des Energieverteilnetzes durch Bedienpersonal vorgenommen werden müssen, um den eingetretenen Fehler zu beherrschen und das fehlerbehaftete Energieverteilnetz in einen sicheren Betriebszustand zu überführen. Aufgrund der Vielzahl der in der Zentraleinheit vorliegenden Daten lässt sich nicht immer ausschließen, dass das Bedienpersonal fehlerhafte Entscheidungen trifft und die vom Bedienpersonal herbeigeführten Eingriffe nicht den gewünschten Erfolg bringen.
Aus der Druckschrift WO 2009/016038 A2 ist ein gattungsgemäßes Energieverteilnetz bekannt.
Ferner ist aus der Druckschrift WO 00/48288 bekannt, ein Energieverteilnetz im Fehlerfall mittels Kontrolleinrichtungen zu rekonfigurieren.
Der Erfindung liegt daher die Aufgabe zugrunde, ausgehend von der WO2009/016038 A2 ein Energieverteilnetz anzugeben, das einen sicheren Betrieb auch im Fehlerfalle ermöglicht.

Diese Aufgabe wird erfindungsgemäß durch ein Energieverteilnetz mit den Merkmalen gemäß Patentanspruch 1 und ein Verfahren zum Betreiben eines Energieverteilnetzes gemäß Patentanspruch 9 gelöst. Vorteilhafte Ausgestaltungen der Erfindung sind in den Unteransprüchen angegeben. Danach ist erfindungsgemäß vorgesehen, dass das erste und das zweite Teilnetz über mindestens einen Schalter derart miteiander elektrisch verknüpft sind, dass das mit der ersten Unterstation verbundene erste Teilnetz oder ein Teilabschnitt davon alternativ mit der zweiten Unterstation verbunden und von dieser mit Energie versorgt werden könnte, und die zweite Unterstation derart ausgestaltet ist, dass sie auf eine Aufforderung hin, das zuvor von der ersten Unterstation versorgte erste Teilnetz oder einen Teilabschnitt davon mit Energie zu versorgen, prüft, ob der zweiten Unterstation zur Versorgung des ersten Teilnetzes oder des Teilabschnitts davon ausreichend Ressourcen zur Verfügung stehen, und bei ausreichenden Ressourcen mit der Energieversorgung des ersten Teilnetzes oder des Teilabschnitts des ersten Teilnetzes beginnt.

Ein wesentlicher Vorteil des erfindungsgemäßen Energieverteilnetzes ist darin zu sehen, dass sich dieses - beispielsweise im Falle eines Fehlers - selbsttätig umkonfigurieren kann. Aufgrund der erfindungsgemäß vorgesehenen Eignung der Unterstationen, selbsttätig prüfen zu können, ob Teilnetze anderer Unterstationen oder Teilabschnitte von Teilnetzen anderer Unterstationen mit Energie versorgt werden könnten, und gegebenenfalls auf eine entsprechende Aufforderung hin mit der Energieversorgung der fremden Teilnetze bzw. der fremden Teilabschnitte tatsächlich zu beginnen, kann eine Umkonfiguration des Energieverteilnetzes unmittelbar in der Unterstationsebene vorgenommen werden. Ein Einbeziehen einer Zentraleinheit kann zwar zusätzlich vorgesehen sein, ist jedoch bei dem erfindungsgemäßen Energieverteilnetz nicht zwingend nötig, da die Unterstationen ihre Ressourcen zur Versorgung von Teilnetzen oder Teilabschnitten selbst überprüfen und eine Neukonfiguration selbst vornehmen können. Auch lässt sich die Menge der an eine Zentraleinheit zu übermittelnden Daten und damit weitere Fehlergefahren reduzieren.

Um ein möglichst schnelles Umkonfigurieren des Energieverteilnetzes zu ermöglichen, wird es als vorteilhaft angesehen, wenn die erste und die zweite Unterstation jeweils eine Kommunikationseinrichtung aufweisen und über diese Kommunikationseinrichtung miteinander eine Kommunikationsverbindung aufbauen können, sei es unmittelbar miteinander oder unter Mitwirkung einer übergeordneten Zentraleinheit.

Eine unmittelbare Datenübertragung zwischen den Unterstationen wird jedoch als vorteilhaft angesehen, weil sie die Übertragungsgeschwindigkeit der Daten erhöht und Eingriffe in die Energieverteilung innerhalb des Energieverteilnetzes ausschließlich durch Komponenten der Unterstationsebene ermöglicht, also ohne Mitwirkung einer übergeordneten Zentraleinheit.

Die zwischen den Unterstationen übermittelten Daten können zusätzlich auch an die übergeordnete Zentraleinheit übermittelt werden, um die jeweils herrschende Konfiguration des Energieverteilnetzes auch zentral bewerten und ggf. steuern zu können.

Bezüglich der Ausgestaltung der beiden Unterstationen wird es als vorteilhaft angesehen, wenn die erste Unterstation derart ausgestaltet ist, dass sie im Falle einer Unterversorgung des ersten Teilnetzes eine Aufforderung (z. B. in Form eines Aufforderungssignals) zumindest auch zu der zweiten Unterstation sendet, die Versorgung des ersten Teilnetzes oder eines Teilabschnitts davon zu übernehmen. Die zweite Unterstation ist vorzugsweise derart ausgestaltet, dass sie auf die Aufforderung der ersten Unterstation hin prüft, ob zur Versorgung des ersten Teilnetzes oder eines Teilabschnitts davon ausreichend Ressourcen zur Verfügung stehen.

Mit Blick auf den Aufbau der Unterstationen wird es als vorteilhaft angesehen, wenn die Unterstationen jeweils eine Kommunikationseinrichtung und eine damit verbundene Recheneinrichtung aufweisen.

Vorzugsweise ist die Recheneinrichtung der zweiten Unterstation derart programmiert, dass sie auf die Aufforderung der ersten Unterstation hin prüft, ob der zweiten Unterstation zur Versorgung des ersten Teilnetzes oder eines Teilabschnitts davon ausreichend Ressourcen zur Verfügung stehen, und bei ausreichenden Ressourcen zumindest ein Steuersignal erzeugt, das eine Umschaltung des mindestens einen Schalters und eine Energieversorgung des ersten Teilnetzes oder eines Teilabschnitts des ersten Teilnetzes auslöst. Dadurch dass die Unterstationen das Energieverteilnetz selbst umkonfigurieren können, lässt sich eine optimale Arbeitsgeschwindigkeit - zum Beispiel im Falle eines Fehlers - erreichen.

Um eine Ressourcenprüfung zu ermöglichen bzw. zu vereinfachen, wird es als vorteilhaft angesehen, wenn die Unterstationen, zumindest die zweite Unterstation, derart ausgestaltet sind, dass sie von der ersten Unterstation oder einer Zentraleinheit gelieferte Last- und/oder Topologiedaten, die sich auf das erste Teilnetz oder dessen Teilabschnitt beziehen, bei der Prüfung, ob zur Versorgung des ersten Teilnetzes oder dessen Teilabschnitts ausreichend Ressourcen zur Verfügung stehen, heranziehen.

Das Übertragen der Last- und/oder Topologiedaten zu der zweiten Unterstation kann beispielsweise automatisch erfolgen, sobald eine entsprechende Aufforderung zur zusätzlichen Energieversorgung an die zweite Unterstation gerichtet wird. Alternativ kann vorgesehen sein, dass die zweite Unterstation selbsttätig nach Eingang einer Anfrage zur zusätzlichen Energieversorgung selbst Last- und/oder Topologiedaten abfragt, sei es von der ersten Unterstation, die die entsprechende Aufforderung gesendet hat, und/oder von der Zentraleinheit, bei der die entsprechenden Last- und/oder Topologiedaten auch vorliegen können.

Beim Übersenden der Last- und/oder Topologiedaten kann vorgesehen sein, dass ausschließlich solche Daten zu der zweiten Unterstation gesendet werden, die sich auf den neu zu versorgenden Teilabschnitt beziehen. Alternativ können auch aktuelle Last- und/oder Topologiedaten des gesamten ersten Teilnetzes oder aktuelle Last- und/oder Topologiedaten des gesamten Energieverteilnetzes zu der zweiten Unterstation übertragen werden.

Je nach der Auslastung der zweiten Unterstation kann die Situation auftreten, dass die zweite Unterstation selbst nicht ausreichend Ressourcen zur Verfügung hat, um aufforderungsgemäß das erste Teilnetz oder einen Teilabschnitt davon mit Energie zu versorgen. Um auch in einem solchen Falle einen sicheren Weiterbetrieb des Energieverteilnetzes zu ermöglichen, wird es als vorteilhaft angesehen, wenn die zweite Unterstation, insbesondere deren Recheneinrichtung, geeignet ist, das zuvor von ihr versorgte zweite Teilnetz oder einen Teilabschnitt dieses zweiten Teilnetzes abzuschalten und dadurch Ressourcen zur Verfügung zu stellen, mit denen die Energieversorgung des ersten Teilnetzes oder eines Teilabschnitts des ersten Teilnetzes erfolgen kann.

Um im Falle eines Abschaltens des zweiten Teilnetzes oder eines Teilabschnitts des zweiten Teilnetzes dennoch eine weitere Energieversorgung zu ermöglichen, wird es als vorteilhaft angesehen, wenn das zweite Teilnetz und ein von einer dritten Unterstation mit Energie versorgtes drittes Teilnetz über mindestens einen weiteren Schalter derart miteinander elektrisch verknüpft sind, dass das mit der zweiten Unterstation verbundene zweite Teilnetz oder ein Teilabschnitt davon alternativ mit der dritten Unterstation verbunden und von dieser mit Energie versorgt werden könnte. Die zweite Unterstation ist vorzugsweise geeignet, vor oder nach dem Abschalten des von ihr versorgten zweiten Teilnetzes oder eines Teilabschnitts dieses zweiten Teilnetzes ein Aufforderungssignal zu erzeugen und über ihre Kommunikationseinrichtung zumindest auch zu der dritten Unterstation zu senden, mit dem eine andere, insbesondere die dritte Unterstation, aufgefordert wird, das zweite Teilnetz oder einen Teilabschnitt dieses zweiten Teilnetzes mit Energie zu versorgen.

Vorzugsweise sind alle Unterstationen des Energieverteilnetzes geeignet, als erste, zweite oder dritte Unterstation im Sinne der obigen Beschreibung Aufforderungen oder Aufforderungssignale zu erzeugen, Last- und/oder Topologiedaten auszuwerten und an einer Umkonfigurierung des Energieverteilnetzes mitzuwirken.

Zusammengefasst können die Unterstationen des oben beschriebenen Energieverteilnetzes im Falle eines Fehlers eine Umverteilung des Energieflusses innerhalb des Energieverteilnetzes selbsttätig hervorrufen, indem sie Teilabschnitte oder Teilnetze des Energieverteilnetzes abschalten oder umschalten, so dass in vielen Fällen eine kontinuierliche Energieverteilung auch im Fehlerfalle erreicht wird.

Die Erfindung bezieht sich darüber hinaus auf eine Unterstation für ein Energieverteilnetz, wie es oben beschrieben ist. Erfindungsgemäß ist diesbezüglich vorgesehen, dass die Unterstation derart ausgestaltet ist, dass sie auf eine Aufforderung hin, ein zuvor von einer anderen Unterstation versorgtes Teilnetz oder einen Teilabschnitt davon mit Energie zu versorgen, selbst prüft, ob zur Versorgung dieses Teilnetzes oder dieses Teilabschnitts ausreichend Ressourcen zur Verfügung stehen, und bei ausreichenden Ressourcen mit der Energieversorgung dieses Teilnetzes oder dieses Teilabschnitts beginnt.

Bezüglich der Vorteile der erfindungsgemäßen Unterstation sei auf die oben genannten Vorteile des erfindungsgemäßen Energieverteilnetzes verwiesen, da die Vorteile des erfindungsgemäßen Energieverteilnetzes denen der erfindungsgemäßen Unterstation im Wesentlichen entsprechen.

Bezüglich des Aufbaus der Unterstation wird es als vorteilhaft angesehen, wenn die Unterstation eine Kommunikationseinrichtung aufweist, über die sie eine Kommunikationsverbindung mit anderen Unterstationen aufbauen kann.

Vorzugsweise weist die Unterstation eine mit ihrer Kommunikationseinrichtung verbundene Recheneinrichtung auf, die derart programmiert ist, dass sie auf die Aufforderung einer anderen Unterstation hin prüft, ob zur Versorgung des Teilnetzes oder des Teilabschnitts ausreichend Ressourcen zur Verfügung stehen, und bei ausreichenden Ressourcen zumindest ein Steuersignal erzeugt, das eine Umschaltung mindestens eines Schalters und damit eine Energieversorgung dieses Teilnetzes oder dieses Teilabschnitts auslöst.

Die Erfindung bezieht sich darüber hinaus auf ein Verfahren zum Betreiben eines Energieverteilnetzes, bei dem eine erste Unterstation ein erstes Teilnetz des Energieverteilnetzes mit Energie versorgt und eine zweite Unterstation ein zweites Teilnetz des Energieverteilnetzes mit Energie versorgt. Erfindungsgemäß ist bezüglich eines solchen Verfahrens vorgesehen, dass das erste und das zweite Teilnetz im fehlerfreien Falle über mindestens einen Schalter voneinander getrennt werden, im Falle einer Unterversorgung des ersten Teilnetzes oder eines Teilabschnitts davon die erste Unterstation ein Anfragesignal erzeugt, mit dem andere Unterstationen des Energieverteilnetzes, insbesondere zumindest auch die zweite Unterstation, aufgefordert werden, das zuvor von der ersten Unterstation versorgte erste Teilnetz oder einen Teilabschnitt davon zukünftig mit Energie zu versorgen, die zweite Unterstation prüft, ob zur Versorgung des ersten Teilnetzes oder eines Teilabschnitts des ersten Teilnetzes ausreichend Ressourcen zur Verfügung stehen, und die zweite Unterstation bei ausreichenden Ressourcen das erste und das zweite Teilnetz über den mindestens einen Schalter miteinander verbindet und mit der Energieversorgung des ersten Teilnetzes oder eines Teilabschnitts des ersten Teilnetzes beginnt.

Bezüglich der Vorteile des erfindungsgemäßen Verfahrens sei auf die obigen Ausführungen im Zusammenhang mit dem erfindungsgemäßen Energieverteilnetz verwiesen, da die Vorteile des erfindungsgemäßen Energieverteilnetzes denen des erfindungsgemäßen Verfahrens im Wesentlichen entsprechen.

Gemäß einer bevorzugten Ausgestaltung des Verfahrens ist vorgesehen, dass die zweite Unterstation von der ersten Unterstation oder einer Zentraleinheit Last- und/oder Topologiedaten empfängt, die sich auf das erste Teilnetz oder dessen Teilabschnitt beziehen, der anstelle von der ersten Unterstationen nachfolgend von der zweiten Unterstation versorgt werden soll. Vorzugsweise zieht die zweite Unterstation diese Last- und/oder Topologiedaten bei der Prüfung, ob zur Versorgung des ersten Teilnetzes oder dessen Teilabschnitts ausreichend Ressourcen zur Verfügung stehen, heran.

Bei den Unterstationen handelt es sich vorzugsweise um Unterstationen der ersten Ebene, also vorzugsweise um Ortsnetzstationen.

Die Erfindung wird nachfolgend anhand von Ausführungsbeispielen näher erläutert; dabei zeigen beispielhaft
- Fig. 1-8: ein Ausführungsbeispiel für ein erfindungsgemäßes Energieverteilnetz, anhand dessen das erfindungsgemäße Verfahren beispielhaft erläutert wird, und
- Fig. 9: ein weiteres Ausführungsbeispiel für ein erfindungsgemäßes Energieverteilnetz.

In den Figuren werden der Übersicht halber für identische oder vergleichbare Komponenten stets dieselben Bezugszeichen verwendet.

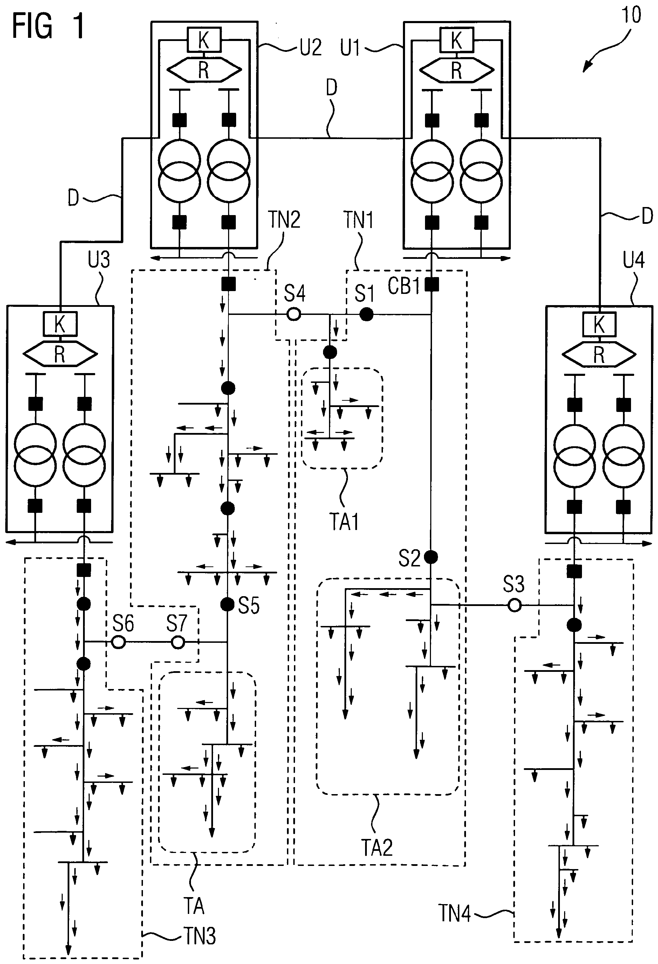

In der Figur 1 sieht man ein Energieverteilnetz 10, von dem in der Figur 1 vier Teilnetze TN1, TN2, TN3 und TN4 dargestellt sind.

Das erste Teilnetz TN1 wird von einer Unterstation U1 mit elektrischer Energie versorgt und weist einen ersten Teilabschnitt TA1 sowie einen zweiten Teilabschnitt TA2 auf. Die beiden Teilabschnitte TA1 und TA2 des ersten Teilnetzes TN1 sind über eingeschaltete Schalter CB1, S1 und S2 elektrisch mit der Unterstation U1 verbunden. Aufgrund des eingeschalteten Zustands (in den Figuren durch schwarze Kreise oder Quadrate dargestellt) der drei Schalter CB1, S1 und S2 kann Energie der Unterstation U1 zu den beiden Teilabschnitten TA1 und TA2 fließen und/oder Energie von der Unterstation U1 aus den Teilabschnitten entnommen werden.

In entsprechender Weise sind die Teilnetze TN2, TN3 und TN4 mit den Unterstationen U2, U3 und U4 verbunden und können über diese mit Energie versorgt werden. Die Teilnetze TN2, TN3 und TN4 oder deren Teilabschnitte stehen u. a. über Schalter S3, S4, S5, S6 und S7 miteinander in Verbindung; in den Figuren sind bei diesen Schaltern geschlossene Schalterzustände durch schwarze Kreise und offene Schalterzustände durch weiße Kreise dargestellt.

Die vier Unterstationen U1, U2, U3 und U4 weisen jeweils eine Kommunikationseinrichtung K auf, die eine unmittelbare Kommunikation mit anderen Unterstationen ermöglicht. Mit den Kommunikationseinrichtungen K steht jeweils eine Recheneinrichtung R in Verbindung, die derart programmiert ist, dass sie die nachfolgend beschriebenen Funktionen der Unterstation(en) ausführen kann.

Die vier Unterstationen U1, U2, U3 und U4 stehen über Datenleitungen D miteinander in Verbindung, so dass sie über diese Datenleitungen D Daten unmittelbar miteinander austauschen können.

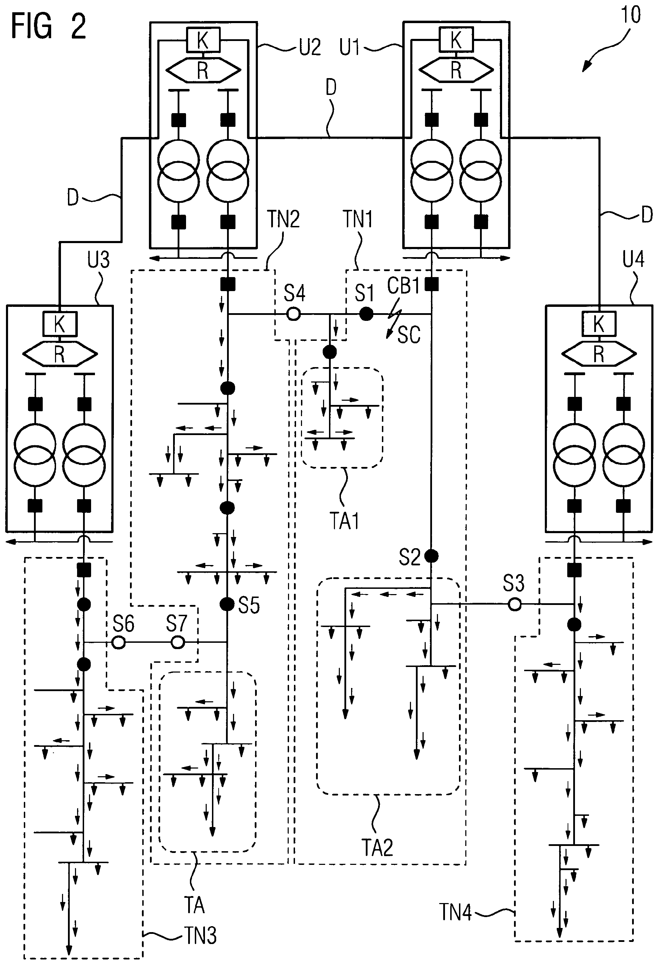

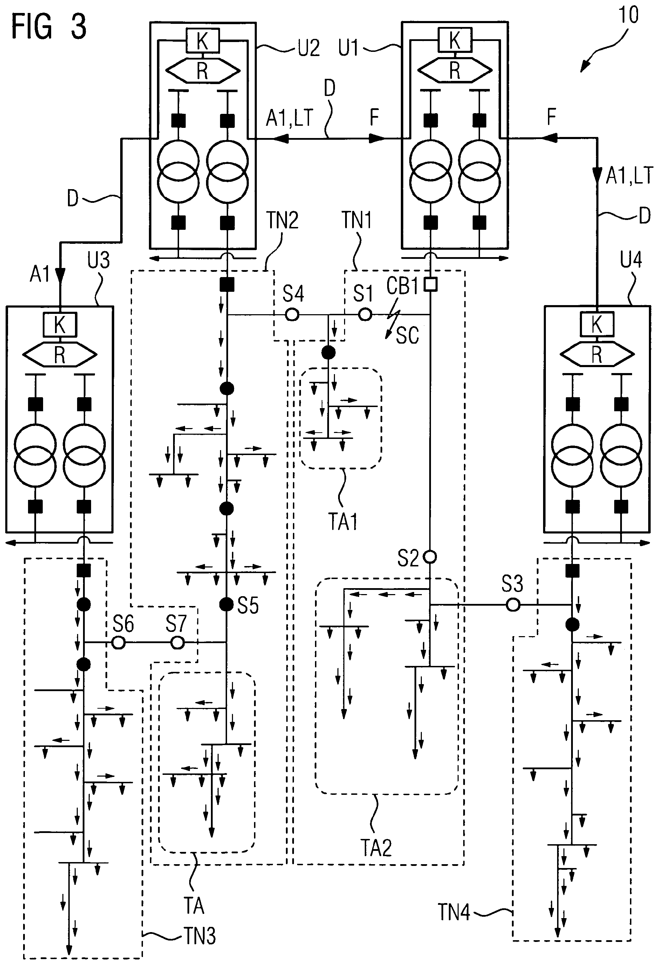

Die Arbeitsweise des Energieverteilnetzes 10 soll nun nachfolgend anhand eines Ausführungsbeispiels näher erläutert werden. Dabei wird beispielhaft davon ausgegangen, dass in dem durch die Schalter CB1, S1 und S2 elektrisch eingegrenzten Abschnitt des ersten Teilnetzes TN1 ein elektrischer Kurzschluss auftritt. Dieser Kurzschluss ist in der Figur 2 durch einen Pfeil mit dem Bezugszeichen SC symbolisiert. Sobald die Unterstation U1 feststellt, dass ein elektrischer Kurzschluss im ersten Teilnetz TN1 aufgetreten ist, wird sie die drei Schalter S1, S2 und CB1 öffnen, um den fehlerbehafteten Abschnitt des ersten Teilnetzes TN1 vom Netz zu trennen. Dieser Betriebszustand ist in der Figur 3 dargestellt. Es lässt sich erkennen, dass aufgrund des Abschaltens dieser drei Schalter S1, S2 und CB1 sowohl der erste Teilabschnitt TA1 als auch der zweite Teilabschnitt TA2 vom Netz getrennt werden und deshalb nicht mehr von der Unterstation U1 mit Energie versorgt werden können.

Um dieses Problem zu lösen, wird die Unterstation U1 ein Anfragesignal an alle anderen Unterstationen, also u. a. auch an die zweite Unterstation U2 und die vierte Unterstation U4 übermitteln, mit dem um eine Energieversorgung des ersten Teilnetzes TN1 bzw. der Teilabschnitte TA1 und TA2 gebeten wird. Das Anfragesignal ist in der Figur 3 mit dem Bezugszeichen A1 gekennzeichnet.

Sobald die übrigen Unterstationen, in der Figur 3 also die Unterstationen U2, U3 und U4, das Anfragesignal A1 erhalten, prüfen sie, ob eine Energieversorgung des vom Fehler betroffenen ersten Teilnetzes TN1 möglich ist. Um diese Prüfung vornehmen zu können, benötigen die Unterstationen U2, U3 und U4 die aktuellen Last- und Topologiedaten LT des ersten Teilnetzes TN1 und der beiden Teilabschnitte TA1 und TA2. Die Übermittlung dieser Last- und Topologiedaten LT kann automatisch erfolgen, wenn die erste Unterstation U1 ihr Anfragesignal A1 erzeugt und an die übrigen Unterstationen U2, U3 und U4 sendet. Beispielsweise können die Last- und Topologiedaten von der ersten Unterstation U1 unmittelbar an die übrigen Unterstationen übersandt werden. Alternativ ist es möglich, dass die Last- und Topologiedaten von einer in der Figur 1 nicht dargestellten Zentraleinheit an die Unterstationen übermittelt werden.

Anstelle einer automatischen Übertragung der Last- und Topologiedaten LT ist es auch möglich, dass die Unterstationen selbst aktiv werden und nach Eingang des Anfragesignals A1 ein entsprechendes Aufforderungssignal F an die erste Unterstation U1 oder eine Zentraleinheit senden, mit dem die Übermittlung der Last- und Topologiedaten LT gefordert wird (vgl. Figur 3). In der Figur 3 wird beispielhaft davon ausgegangen, dass die beiden Unterstationen U2 und U4 von der Unterstation U1 die Last- und Topologiedaten LT anfordern und erhalten.

Sobald in der vierten Unterstation U4 die Last- und Topologiedaten LT des ersten Teilnetzes TN1 vorliegen, wird die Unterstation U4 selbsttätig prüfen, ob sie das erste Teilnetz TN1 vollständig oder einen Abschnitt davon mit Energie versorgen kann. Hierzu prüft sie, welche Ressourcen der vierten Unterstation U4 insgesamt zur Verfügung stehen, sei es durch Energieerzeugung innerhalb des Teilnetzes TN4 oder durch Einspeisung von außen, und wie viele von diesen Ressourcen bereits im vierten Teilnetz TN4 verbraucht werden.

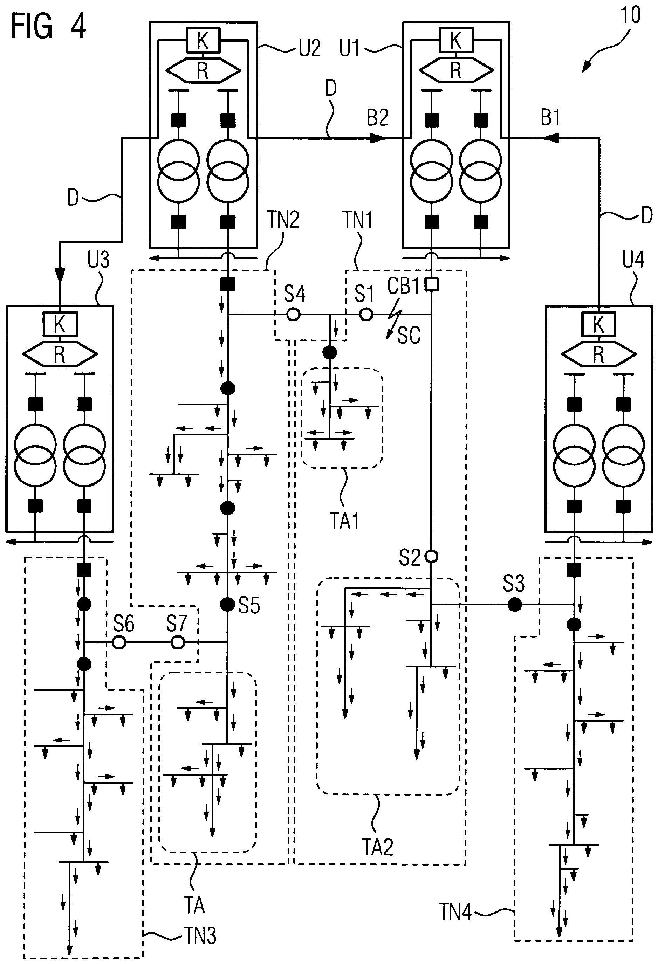

Stellt die vierte Unterstation U4 beispielsweise fest, dass sie den zweiten Teilabschnitt TA2 des ersten Teilnetzes TN1 mit Energie versorgen könnte, so teilt sie dies der ersten Unterstation U1 mittels eines Bestätigungssignals B1 mit und erzeugt ein Steuersignal, mit dem der Schalter S3, der die beiden Teilnetze TN1 und TN4 miteinander verbindet, geschlossen wird. Dieser Zustand des Energieverteilnetzes 10 ist in der Figur 4 dargestellt. Durch das Einschalten des dritten Schalters S3 wird somit eine Energieversorgung des zweiten Teilabschnitts TA2 des ersten Teilnetzes TN1 durch die vierte Unterstation U4 bewirkt. Mit anderen Worten wird also der zweite Teilabschnitt TA2 des ursprünglich ersten Teilnetzes TN1 dem vierten Teilnetz TN4 hinzugefügt.

Die entsprechende Umkonfiguration des Energieverteilnetzes 10 durch das Einschalten des Schalters S3 kann die vierte Unterstation U4 zusätzlich auch an eine Zentraleinheit übermitteln, indem sie beispielsweise das Bestätigungssignals B1 auch an die Zentraleinheit sendet.

Bezüglich der zweiten Unterstation U2 wird nachfolgend beispielhaft davon ausgegangen, dass diese nach Erhalt des Anfragesignals A1 im Rahmen ihrer Ressourcenüberprüfung festgestellt hat, dass eine Übernahme der Energieversorgung des ersten Teilnetzes TN1 insgesamt oder auch eines der Teilabschnitte TA1 oder TA2 mangels ausreichender eigener Ressourcen nicht in Betracht kommt. Die zweite Unterstation U2 kann dieses Ergebnis beispielsweise über ein Bestätigungssignal B2 über die Datenleitung D an die erste Unterstation U1 übermitteln (vg. Figur 4).

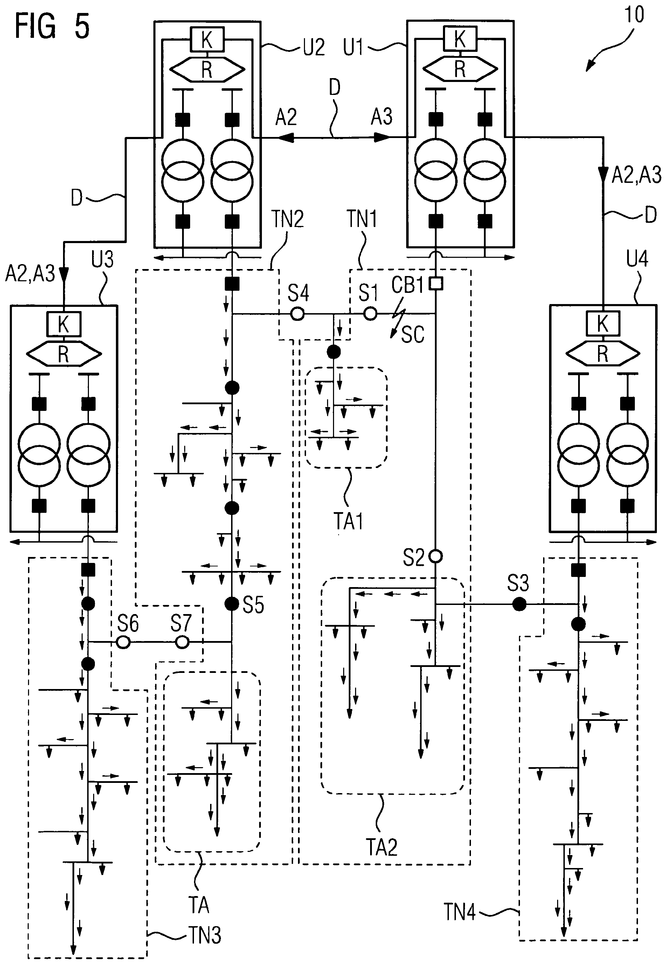

In der Unterstation U1 liegt nun die Information vor, dass von dem ersten Teilnetz TN1 der zweite Teilabschnitt TA2 mit Energie versorgt wird, nämlich von der vierten Unterstation U4, und der erste Teilabschnitt TA1 immer noch von einer Energieversorgung abgeschnitten ist. Aus diesem Grunde wird die erste Unterstation U1 ein weiteres Anfragesignal A2 erzeugen und an alle Unterstationen übermitteln, mit dem eine Übernahme der Energieversorgung des ersten Teilabschnittes TA1 verlangt wird (vgl. Figur 5).

Nach Empfang des zweiten Anfragesignals A2 liegt aufgrund der zuvor empfangenen Last- und Topologiedaten in der zweiten Unterstation U2 die Information vor, dass eine Versorgung des ersten Teilabschnitts TA1 nur noch durch die zweite Unterstation U2 erfolgen kann, wenn der Schalter S4 geschlossen werden würde. Um ein Umschalten des Schalters S4 und eine nachfolgende Energieversorgung des ersten Teilabschnitts TA1 zu ermöglichen, muss die zweite Unterstation U2 Ressourcen einsparen. Eine solche Einsparung von Ressourcen wäre bei dem zweiten Teilnetz TN2 möglich, wenn ein Teilabschnitt TA abgeschaltet werden würde und stattdessen von einer anderen Unterstation, beispielsweise der dritten Unterstation U3, mit Energie versorgt werden würde. Um eine solche Umschaltung des Teilabschnitts TA zu erreichen, erzeugt die zweite Unterstation U2 ein Anfragesignal A3, das sie an alle Unterstationen, damit auch an die dritte Unterstation U3, sendet (vgl. Figur 5) .

Nach Empfang des dritten Anfragesignals A3 prüft die dritte Unterstation U3 anhand aktueller Last- und Topologiedaten LT2, die sich ausschließlich oder zumindest auch auf den Teilabschnitt TA des zweiten Teilnetzes TN2 beziehen, ob der dritten Unterstation U3 ausreichend Ressourcen zur Verfügung stehen, um diesen Teilabschnitt TA des zweiten Teilnetzes TN2 mit Energie zu versorgen.

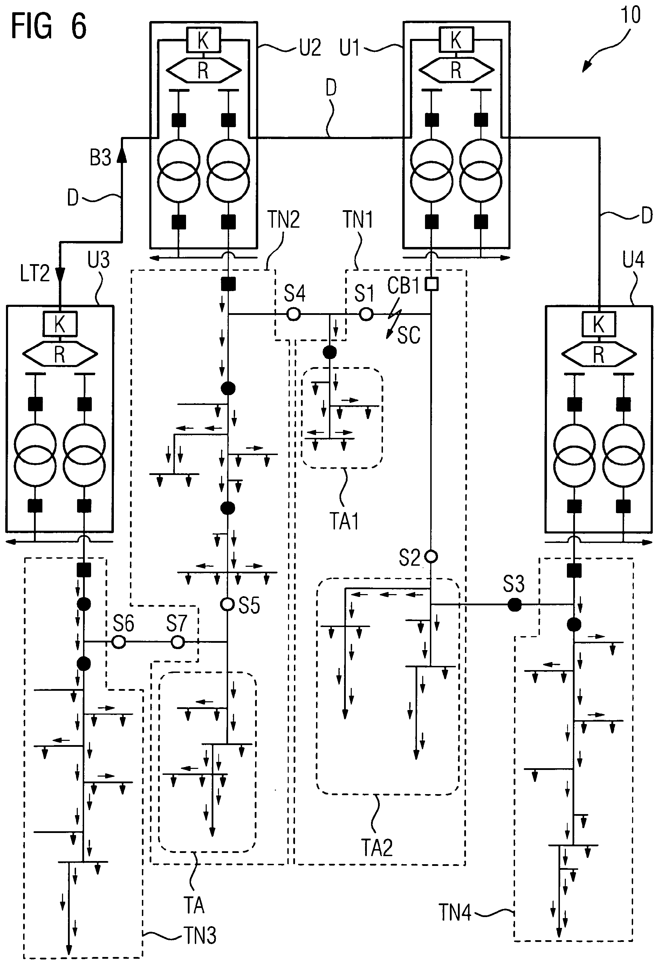

Nachfolgend wird beispielhaft davon ausgegangen, dass die dritte Unterstation U3 zu dem Ergebnis kommt, dass eine Energieversorgung des Teilabschnittes TA des zweiten Teilnetzes TN2 möglich wäre. In diesem Falle erzeugt die dritte Unterstation U3 ein Bestätigungssignal B3, mit dem es die Übernahme der Energieversorgung des Teilabschnittes TA bestätigt (vgl. Figur 6).

Nach Empfang des Bestätigungssignals B3 wird die zweite Unterstation U2 den Schalter S5 mittels eine entsprechenden Steuerbefehls öffnen, so dass der Teilabschnitt TA von der zweiten Unterstation U2 elektrisch getrennt wird (vgl. Figur 6) .

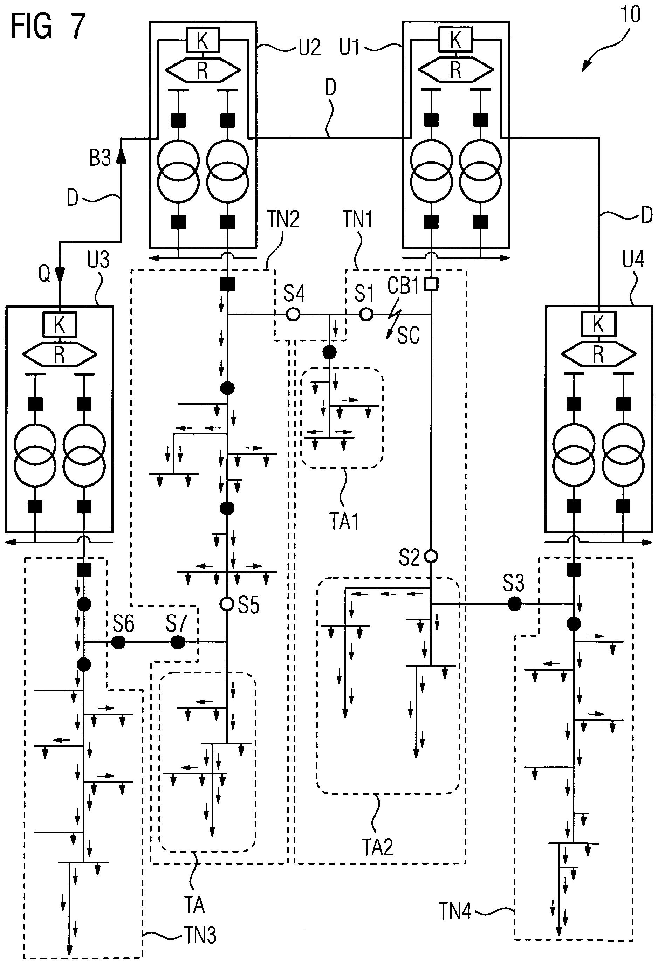

Nach Erhalt eines entsprechenden Quittierungssignals Q von der zweiten Unterstation U2 oder nach Ablauf einer vorgegebenen Zeitspanne erzeugt die dritte Unterstation U3 Steuersignale, mit denen die Schalter S6 und S7 eingeschaltet werden, so dass der Teilabschnitt TA an das dritte Teilnetz TN3 angeschlossen wird. Nach dem Einschalten der Schalter S6 und S7 (vgl. Figur 7) wird der Teilabschnitt TA von der dritten Unterstation U3 versorgt und somit faktisch Bestandteil des dritten Teilnetzes TN3.

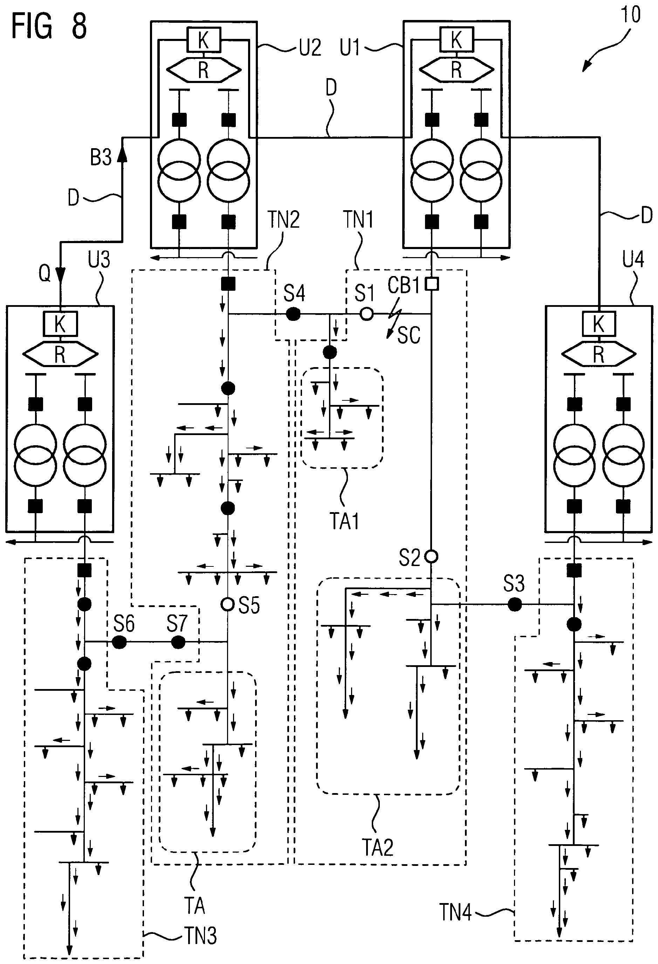

Anschließend schließt die Unterstation U2 den Schalter S4, um den ersten Teilabschnitt TA1 des Teilnetzes TN1 an die Unterstation U2 anzuschließen (vgl. Figur 8).

Zusammengefasst weist das Energieverteilnetz 10 gemäß den Figuren 1 bis 8 Unterstationen U1 bis U4 auf, die miteinander unmittelbar kommunizieren können und aufgrund ihrer Ausgestaltung, insbesondere aufgrund der Ausgestaltung und der Programmierung ihrer Recheneinrichtungen R, in der Lage sind, das Energieverteilnetz 10 selbsttätig bzw. autark umzukonfigurieren, um auch im Fehlerfalle eine Weiterversorgung vom Fehler betroffener Teilabschnitte zu ermöglichen.

Beim Ausführungsbeispiel gemäß den Figuren 1 bis 8 werden - wie oben ausgeführt - durch die selbsttätige Umkonfiguration des Netzes die Teilabschnitte TA1 und TA2 nach einem Fehlereintritt nicht mehr von der ersten Unterstation U1 versorgt, sondern stattdessen "hälftig" von den beiden Unterstationen U2 und U4, wobei zur Unterstützung der Unterstation U2 die dritte Unterstation U3 einen Teilabschnitt TA des zweiten Teilnetzes TN2 übernommen hat.

Bei dem Ausführungsbeispiel gemäß den Figuren 1 bis 8 erfolgt die Umkonfiguration des Energieverteilnetzes 10 ausschließlich in der Ebene der Unterstationen. Eine Einbindung einer Zentraleinheit ist bei diesem Ausführungsbeispiel nicht erforderlich.

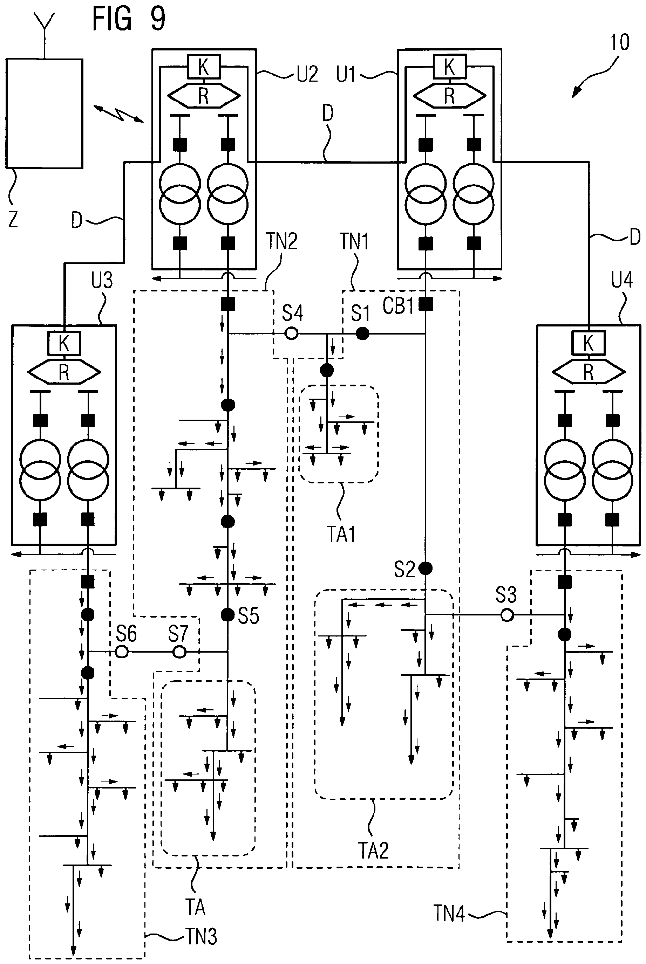

In der Figur 9 ist ein Ausführungsbeispiel für ein Energieverteilnetz 10 dargestellt, bei dem die Unterstationen U1 bis U4 zusätzlich auch mit einer Zentraleinheit Z in Verbindung stehen, sei dies über Datenleitungen D oder über Funk.

Das Umkonfigurieren des Energieverteilnetzes 10 gemäß Figur 9 kann erfolgen, wie dies beim Ausführungsbeispiel gemäß den Figuren 1 bis 8 im Detail beschrieben worden ist, also ausschließlich in der Ebene der Unterstationen. Zusätzlich kann vorgesehen sein, dass die Anfragesignale und Bestätigungssignale, die zu einer Umkonfiguration des Energieverteilnetzes 10 führen, zusätzlich auch zur Zentraleinheit Z übermittelt werden, damit diese über den jeweiligen Betriebszustand des Energieverteilnetzes 10 stets informiert ist.

Darüber hinaus ist es möglich, die Last- und Topologiedaten LT bzw. LT2 von der Zentraleinheit Z zu den Unterstationen U1 bis U4 zu übermitteln, wenn diese entsprechende Anfragesignale an die Zentraleinheit Z senden. Ein Abfragen der Last- und Topologiedaten LT von der Zentraleinheit Z führt in vorteilhafter Weise zu einer Entlastung der Unterstationen U1 bis U4.

### Bezugszeichenliste

- 10: Energieverteilnetz
- A1, A2, A3: Anfragesignal
- F: Aufforderungssignal
- B1, B2, B3: Bestätigungssignal
- CB1, S1-S7: Schalter
- D: Datenleitung
- K: Kommunikationseinrichtung
- LT, LT2: Last- und Topologiedaten
- Q: Quittierungssignal
- R: Recheneinrichtung
- TA, TA1, TA2: Teilabschnitte
- TN1-TN4: Teilnetze
- U1-U4: Unterstationen
- Z: Zentraleinheit

## Patentansprüche

1. Energieverteilnetz (10) mit einer ersten Unterstation (U1), die ein erstes Teilnetz (TN1) des Energieverteilnetzes (10) mit Energie versorgen kann, und mit einer zweiten Unterstation (U2), die ein zweites Teilnetz (TN2) des Energieverteilnetzes (10) mit Energie versorgen kann, wobei
- das erste und das zweite Teilnetz (TN1, TN2) über mindestens einen Schalter (S4) derart miteinander elektrisch verknüpft sind, dass das mit der ersten Unterstation (U1) verbundene erste Teilnetz (TN1) oder ein Teilabschnitt (TA1) davon alternativ durch Schließen des mindestens einen Schalters (S4) mit der zweiten Unterstation (U2) verbunden und von dieser mit Energie versorgt werden könnte,
- **dadurch gekennzeichnet, dass**
das erste und das zweite Teilnetz (TN1,TN2) im fehlerfreien Falle über mindestens einen Schalter (S4) voneinander getrennt sind, und
- die zweite Unterstation (U2) derart ausgestaltet ist, dass sie auf eine Aufforderung (A1) der ersten Unterstation (U1) mittels eines Aufforderungssignals hin, das zuvor von der ersten Unterstation (U1) versorgte erste Teilnetz (TN1) oder einen Teilabschnitt (TA1) davon mit Energie zu versorgen, prüft, ob der zweiten Unterstation (U2) zur Versorgung des ersten Teilnetzes (TN1) oder des Teilabschnitts (TA1) davon ausreichend Ressourcen zur Verfügung stehen, und bei ausreichenden Ressourcen mit der Energieversorgung des ersten Teilnetzes (TN1) oder des Teilabschnitts (TA1) des ersten Teilnetzes (TN1) beginnt.

2. Energieverteilnetz nach Anspruch 1,
**dadurch gekennzeichnet, dass**
- die erste und die zweite Unterstation (U1, U2) jeweils eine Kommunikationseinrichtung (K) aufweisen und über diese Kommunikationseinrichtung miteinander eine Kommunikationsverbindung aufbauen können,
- die erste Unterstation (U1) derart ausgestaltet ist, dass sie im Falle einer Unterversorgung des ersten Teilnetzes (TN1) eine Aufforderung zumindest auch zu der zweiten Unterstation (U2) sendet, die Versorgung des ersten Teilnetzes (TN1) oder eines Teilabschnitts (TA1) davon zu übernehmen, und
- die zweite Unterstation (U2) derart ausgestaltet ist, dass sie auf die Aufforderung der ersten Unterstation (U1) hin prüft, ob zur Versorgung des ersten Teilnetzes (TN1) oder eines Teilabschnitts (TA1) davon ausreichend Ressourcen zur Verfügung stehen.

3. Energieverteilnetz nach Anspruch 2,
**dadurch gekennzeichnet, dass**
die zweite Unterstation (U2) eine mit ihrer Kommunikationseinrichtung (K) verbundene Recheneinrichtung (R) aufweist, die derart programmiert ist, dass sie auf die Aufforderung der ersten Unterstation (U1) hin prüft, ob der zweiten Unterstation (U2) zur Versorgung des ersten Teilnetzes (TN1) oder eines Teilabschnitts (TA1) davon ausreichend Ressourcen zur Verfügung stehen, und bei ausreichenden Ressourcen zumindest ein Steuersignal erzeugt, das eine Umschaltung des mindestens einen Schalters (S4) und eine Energieversorgung des ersten Teilnetzes (TN1) oder eines Teilabschnitts (TA1) des ersten Teilnetzes (TN1) auslöst.

4. Energieverteilnetz nach einem der voranstehenden Ansprüche,
**dadurch gekennzeichnet, dass**
die zweite Unterstation (U2) derart ausgestaltet ist, dass sie von der ersten Unterstation (U1) oder einer Zentraleinheit (Z) gelieferte Last- und/oder Topologiedaten (LT), die sich auf das erste Teilnetz (TN1) oder dessen Teilabschnitt (TA1) beziehen, bei der Prüfung, ob zur Versorgung des ersten Teilnetzes (TN1) oder dessen Teilabschnitts (TA1) ausreichend Ressourcen zur Verfügung stehen, heranzieht.

5. Energieverteilnetz nach einem der voranstehenden Ansprüche,
**dadurch gekennzeichnet, dass**
die zweite Unterstation (U2), insbesondere deren Recheneinrichtung (R), geeignet ist, das zuvor von ihr versorgte zweite Teilnetz (TN2) oder einen Teilabschnitt (TA) dieses zweiten Teilnetzes (TN2) abzuschalten und dadurch Ressourcen zur Verfügung zu stellen, mit denen die Energieversorgung des ersten Teilnetzes (TN1) oder eines Teilabschnitts (TA1) des ersten Teilnetzes (TN1) erfolgen kann.

6. Energieverteilnetz nach Anspruch 5,
**dadurch gekennzeichnet, dass**
- das zweite Teilnetz (TN2) und ein von einer dritten Unterstation (U3) mit Energie versorgtes drittes Teilnetz (TN3) über mindestens einen weiteren Schalter (S6, S7) derart miteinander elektrisch verknüpft sind, dass das mit der zweiten Unterstation (U2) verbundene zweite Teilnetz (TN2) oder ein Teilabschnitt (TA) davon alternativ mit der dritten Unterstation (U3) verbunden und von dieser mit Energie versorgt werden könnte, und
- die zweite Unterstationen (U2) geeignet ist, vor oder nach dem Abschalten des von ihr versorgten zweiten Teilnetzes (TN2) oder eines Teilabschnitts (TA) dieses zweiten Teilnetzes (TN2) ein Anfragesignal (A3) zu erzeugen und über ihre Kommunikationseinrichtung (K) zumindest auch zu der dritten Unterstation (U3) zu senden, mit dem die dritte Unterstation (U3) aufgefordert wird, das zweite Teilnetz (TN2) oder einen Teilabschnitt (TA) dieses zweiten Teilnetzes (TN2) mit Energie zu versorgen.

7. Unterstation für ein Energieverteilnetz nach einem der voranstehenden Ansprüche,
**dadurch gekennzeichnet, dass**
die Unterstation (U2, U3, U4) derart ausgestaltet ist, dass sie auf eine Aufforderung mittels eines Aufforderungssignals hin, ein zuvor von einer anderen Unterstation (U1, U2) versorgtes Teilnetz (TN1, TN2) oder einen Teilabschnitt (TA1, TA2, TA) davon mit Energie zu versorgen, selbst prüft, ob zur Versorgung dieses Teilnetzes oder dieses Teilabschnitts ausreichend Ressourcen zur Verfügung stehen, und bei ausreichenden Ressourcen durch Schließen mindestens eines im fehlerfreien Falle geöffneten Schalters (S4) mit der Energieversorgung dieses Teilnetzes (TN1, TN2) oder dieses Teilabschnitts (TA1, TA2, TA) beginnt.

8. Unterstation nach Anspruch 7,
**dadurch gekennzeichnet, dass**
- die Unterstation (U1-U4) eine Kommunikationseinrichtung (K) aufweist, über die sie eine Kommunikationsverbindung mit der anderen Unterstation (U1-U4) aufbauen kann, und
- die Unterstation (U1-U4) eine mit ihrer Kommunikationseinrichtung (K) verbundene Recheneinrichtung (R) aufweist, die derart programmiert ist, dass sie auf die Aufforderung der anderen Unterstation hin prüft, ob zur Versorgung des Teilnetzes (TN1-TN4) oder des Teilabschnitts ausreichend Ressourcen zur Verfügung stehen, und bei ausreichenden Ressourcen zumindest ein Steuersignal erzeugt, das eine Umschaltung mindestens eines Schalters und damit eine Energieversorgung dieses Teilnetzes oder dieses Teilabschnitts auslöst.

9. Verfahren zum Betreiben eines Energieverteilnetzes (10), bei dem eine erste Unterstation (U1) ein erstes Teilnetz (TN1) des Energieverteilnetzes (10) mit Energie versorgt und eine zweite Unterstation (U2, U4) ein zweites Teilnetz (TN2, TN4) des Energieverteilnetzes (10) mit Energie versorgt,
**dadurch gekennzeichnet, dass**
- das erste und das zweite Teilnetz (TN1, TN2) im fehlerfreien Falle über mindestens einen Schalter (S4) voneinander getrennt werden,
- im Falle einer Unterversorgung des ersten Teilnetzes (TN1) oder eines Teilabschnitts (TA1, TA2) davon die erste Unterstation (U1) ein Anfragesignal (A1) erzeugt, mit dem andere Unterstationen (U2, U4) des Energieverteilnetzes, insbesondere zumindest auch die zweite Unterstation (U2), aufgefordert werden, das zuvor von der ersten Unterstation (U1) versorgte erste Teilnetz (TN1) oder einen Teilabschnitt (TA1) davon zukünftig mit Energie zu versorgen,
- die zweite Unterstation (U2) prüft, ob zur Versorgung des ersten Teilnetzes (TN1) oder eines Teilabschnitts (TA1) des ersten Teilnetzes ausreichend Ressourcen zur Verfügung stehen, und
- die zweite Unterstation (U2) bei ausreichenden Ressourcen das erste und das zweite Teilnetz (TN1, TN2) über den mindestens einen Schalter (S4) miteinander verbindet und mit der Energieversorgung des ersten Teilnetzes (TN1) oder eines Teilabschnitts (TA1, TA2) des ersten Teilnetzes (TN1) beginnt.

10. Verfahren nach Anspruch 9,
**dadurch gekennzeichnet, dass**
die zweite Unterstation (U2) von der ersten Unterstation (U1) oder einer Zentraleinheit (Z) Last- und/oder Topologiedaten (LT) empfängt, die sich auf das erste Teilnetz (TN1) oder dessen Teilabschnitt (TA1) beziehen, der anstelle von der ersten Unterstationen (U1) nachfolgend von der zweiten Unterstation (U2) versorgt werden soll, und diese Last- und/oder Topologiedaten (LT) bei der Prüfung, ob zur Versorgung des ersten Teilnetzes (TN1) oder dessen Teilabschnitts (TA1) ausreichend Ressourcen zur Verfügung stehen, heranzieht.

## Claims

1. Energy distribution network (10) comprising a first substation (U1), which is able to supply energy to a first subnetwork (TN1) of the energy distribution network (10), and a second substation (U2), which is able to supply energy to a second subnetwork (TN2) of the energy distribution network (10), wherein
- the first and the second subnetwork (TN1, TN2) are electrically linked via at least one switch (S4) in such a manner that the first subnetwork (TN1), or a subsection (TA1) thereof, which is connected to the first substation (U1) is alternatively connected to the second substation (U2) by closing the at least one switch (S4) and can be supplied with energy by this second substation,
**characterised in that**
- the first and second subnetwork (TN1, TN2) are isolated from each other by at least one switch (S4) in the absence of a fault, and
- the second substation (U2) is so designed that, in response to a request (A1) of the first substation (U1) by means of a request signal to supply energy to the first subnetwork (TN1), or a subsection (TA1) thereof, which was previously supplied with energy by the first substation (U1), it checks whether the second substation (U2) has sufficient resources to supply the first subnetwork (TN1) or the subsection (TA1) thereof and, if sufficient resources exist, starts to supply energy to the first subnetwork (TN1) or the subsection (TA1) of the first subnetwork (TN1).

2. Energy distribution network according to claim 1,
**characterised in that**
- the first and the second substation (U1, U2) each have a communication device (K) and can establish a communication connection to each other via this communication device,
- the first substation (U1) is so designed that, in the event of a supply shortage in the first subnetwork (TN1), it sends a request to at least the second substation (U2) to assume responsibility for the supply of the first subnetwork (TN1) or a subsection (TA1) thereof, and
- the second substation (U2) is so designed that, in response to the request from the first substation (U1), it checks whether it has sufficient resources to supply the first subnetwork (TN1) or a subsection (TA1) thereof.

3. Energy distribution network according to claim 2,
**characterised in that**
the second substation (U2) has a computing device (R) which is connected to its communication device (K) and programmed in such a way that, in response to the request from the first substation (U1), it checks whether the second substation (U2) has sufficient resources to supply the first subnetwork (TN1) or a subsection (TA1) thereof and, if sufficient resources exist, generates at least one control signal which triggers a switchover of the at least one switch (S4) and a supply of energy to the first subnetwork (TN1) or a subsection (TA1) of the first subnetwork (TN1).

4. Energy distribution network according to one of the preceding claims,
**characterised in that**
the second substation (U2) is so designed as to refer to loading and/or topology data (LT), which is provided by the first substation (U1) or a centralised unit (Z) and relates to the first subnetwork (TN1) or its subsection (TA1), when checking whether sufficient resources are available to supply the first subnetwork (TN1) or its subsection (TA1).

5. Energy distribution network according to one of the preceding claims,
**characterised in that**
the second substation (U2), in particular its computing device (R), is capable of disconnecting the second subnetwork (TN2) or a subsection (TA) of this second subnetwork (TN2) which it previously supplied, thereby making available resources by means of which the energy supply to the first subnetwork (TN1) or a subsection (TA1) of the first subnetwork (TN1) can be provided.

6. Energy distribution network according to claim 5,
**characterised in that**
- the second subnetwork (TN2) and a third subnetwork (TN3), which is supplied with energy by a third substation (U3), are electrically linked via at least one further switch (S6, S7) in such a manner that the second subnetwork (TN2), or a subsection (TA) thereof, which is connected to the second substation (U2) can alternatively be connected to the third substation (U3) and supplied with energy by said third substation (U3), and
- the second substation (U2) is capable, before or after disconnecting the second subnetwork (TN2) or a subsection (TA) of this second subnetwork (TN2) supplied by said second substations (U2), of generating a prompt signal (A3) and sending said signal via its communication device (K) to at least the third substation (U3), by means of which signal the third substation (U3) is requested to supply energy to the second subnetwork (TN2) or a subsection (TA) of this second subnetwork (TN2).

7. Substation for an energy distribution network according to one of the preceding claims,
**characterised in that**
the substation (U2, U3, U4) is so designed that, in response to a request by means of a request signal to supply energy to a subnetwork (TN1, TN2), or a subsection (TA1, TA2, TA) thereof, which was previously supplied by a different substation (U1, U2), it independently checks whether sufficient resources are available to supply this subnetwork or this subsection and, if sufficient resources exist, starts to supply energy to this subnetwork (TN1, TN2) or this subsection (TA1, TA2, TA) by closing at least one switch (S4) opened in the absence of a fault.

8. Substation according to claim 7,
**characterised in that**
- the substation (U1-U4) has a communication device (K) via which it can establish a communication connection to the other substation (U1-U4), and
- the substation (U1-U4) has a computing device (R) which is connected to its communication device (K) and programmed in such a way that, in response to the request from another substation, it checks whether sufficient resources are available to supply the subnetwork (TN1-TN4) or the subsection and, if sufficient resources exist, generates at least one control signal which triggers a switchover of at least one switch and therefore a supply of energy to this subnetwork or this subsection.

9. Method for operating an energy distribution network (10), in which a first substation (U1) supplies energy to a first subnetwork (TN1) of the energy distribution network (10) and a second substation (U2, U4) supplies energy to a second subnetwork (TN2, TN4) of the energy distribution network (10),
**characterised in that**
- the first and the second subnetwork (TN1, TN2) are isolated from each other by at least one switch (S4) in the absence of a fault,
- in the event of a supply shortage of the first subnetwork (TN1) or a subsection (TA1, TA2) thereof, the first substation (U1) generates a prompt signal (A1) by means of which other substations (U2, U4) of the energy distribution network, in particular at least the second substation (U2), are requested henceforth to supply energy to the first subnetwork (TN1), or a subsection (TA1) thereof, which was previously supplied by the first substation (U1),
- the second substation (U2) checks whether sufficient resources are available to supply the first subnetwork (TN1) or a subsection (TA1) of the first subnetwork, and
- if sufficient resources exist, the second substation (U2) connects the first and the second subnetwork (TN1, TN2) to each other via the at least one switch (S4) and starts to supply energy to the first subnetwork (TN1) or a subsection (TA1, TA2) of the first subnetwork (TN1).

10. Method according to claim 9,
**characterised in that**
the second substation (U2) receives loading and/or topology data (LT) from the first substation (U1) or a centralised unit (Z), said loading and/or topology data (LT) relating to the first subnetwork (TN1), or its subsection (TA1), which is henceforth to be supplied by the second substation (U2) instead of by the first substation (U1), and the second substation (U2) refers to this loading and/or topology data (LT) when checking whether sufficient resources are available to supply the first subnetwork (TN1) or its subsection (TA1).

## Revendications

1. Réseau (10) de distribution d'énergie, comprenant une première sous-station (U1), qui peut alimenter en énergie un premier réseau (TN1) partiel du réseau (10) de distribution d'énergie, et une deuxième sous-station (U2), qui peut alimenter en énergie un deuxième réseau (TN2) partiel du réseau (10) de distribution d'énergie, dans lequel
- le premier et le deuxième réseaux (TN1, TN2) partiels sont combinés électriquement entre eux par au moins un interrupteur (S4), de manière à ce que le premier réseau (TN1) partiel ou une section (TA1) partielle de celui-ci, relié à la première sous-station (U1), puisse, en alternance, par fermeture du au moins un interrupteur (S4), être relié à la deuxième sous-station (U2) et être alimenté en énergie par celle-ci,
- **caractérisé en ce que**
le premier et le deuxième réseaux (TN1, TN2) partiels sont, dans le cas où il n'y a pas de défaut, séparés l'un de l'autre par au moins un interrupteur (S4), et
- la deuxième sous-station (U2) est conformée de manière, sur une invitation (A1) de la première sous-station (U1), au moyen d'un signal d'invitation, à alimenter en énergie le premier réseau (TN1) partiel ou une section (TA1) partielle de celui-ci, alimenté auparavant par la première sous-station (U1), à contrôler si la deuxième sous-station (U2) dispose de ressources suffisantes pour l'alimentation du premier réseau (TN1) partiel ou de la section (TA1) partielle de celui-ci, et, si les ressources sont suffisantes, à faire commencer l'alimentation en énergie du premier réseau (TN1) partiel ou de la section (TA1) partielle du premier réseau (TN1) partiel.

2. Réseau de distribution d'énergie suivant la revendication 1,
**caractérisé en ce que**
- la première et la deuxième sous-stations (U1, U2) ont chacune un dispositif (K) de communication et peuvent, par ce dispositif de communication, établir entre elles une liaison de communication,
- la première sous-station (U1) est conformée, de manière, dans le cas d'une sous alimentation du premier réseau (TN1) partiel, à envoyer une invitation, au moins également à la deuxième sous-station (U2), de prendre en charge l'alimentation du premier réseau (TN1) partiel ou d'une section (TA1) partielle de celui-ci, et
- la deuxième sous-station (U2) est conformée, de manière, sur l'invitation de la première sous-station (U1), à contrôler si des ressources suffisantes pour l'alimentation du premier réseau (TN1) partiel ou d'une section (TA1) partielle de celui-ci, sont à disposition.

3. Réseau de distribution d'énergie suivant la revendication 2,
**caractérisé en ce que**
la deuxième sous-station (U2) a un dispositif (R) d'ordinateur, qui est relié à son dispositif (K) de communication et qui est programmé, de manière à contrôler, sur l'invitation de la première sous-station (U1), si des ressources suffisantes pour l'alimentation du premier réseau (TN1) partiel ou d'une section (TA1) partielle de celui-ci, sont à disposition de la deuxième sous-station (U2), et, si les ressources sont suffisantes, à produire au moins un signal de commande, qui déclenche une inversion du au moins un interrupteur (S4) et une alimentation en énergie du premier réseau (TN1) partiel ou d'une section (TA1) partielle du premier réseau (TN1) partiel.

4. Réseau de distribution d'énergie suivant l'une des revendications précédentes,
**caractérisé en ce que**
la deuxième sous-station (U2) est conformée de manière à tirer parti de données (LT) de charge et/ou de topologie fournies par la première sous-station (U1) ou par une unité (Z) centrale et se rapportant au premier réseau (TN1) partiel ou à sa section (TA1) partielle, lors du contrôle du point de savoir si des ressources suffisantes pour l'alimentation du premier réseau (TN1) partiel ou de sa section (TA1) partielle sont à disposition.

5. Réseau de distribution d'énergie suivant l'une des revendications précédentes,
**caractérisé en ce que**
la deuxième sous-station (U2) est propre, notamment par son dispositif (R) d'ordinateur, à mettre hors circuit le deuxième réseau (TN2) partiel ou une section (TA1) partielle de ce deuxième réseau (TN2) partiel qu'elle alimentait auparavant, et ainsi à mettre à disposition des ressources, par lesquelles l'alimentation en énergie du premier réseau (TN1) partiel ou d'une section (TA1) partielle du premier réseau (TN1) partiel peut s'effectuer.

6. Réseau de distribution d'énergie suivant la revendication 5,
**caractérisé en ce que**
- le deuxième réseau (TN2) partiel et un troisième réseau (TN3) partiel, alimenté en énergie par une troisième sous-station (U3) sont combinés électriquement entre eux au moyen d'un autre interrupteur (S6, S7), de manière à ce que le deuxième réseau (TN2) partiel ou une section (TA) partielle de celui-ci, relié à la deuxième sous-station (U2), puisse être relié en alternance à la troisième sous-station (U3) et être alimenté en énergie par celle-ci, et
- la deuxième sous-station (U2) est propre, avant ou après la mise hors circuit du deuxième réseau (TN2) partiel ou d'une section (TA) partielle de ce deuxième sous réseau (TN2) partiel qu'elle alimentait, à produire un signal (A3) de demande et à l'envoyer par son dispositif (K) de communication, au moins également à la troisième sous-station (U3), signal par lequel la troisième sous-station (U3) est invitée à alimenter en énergie le deuxième réseau (TN2) partiel ou une section (TA) partielle de ce deuxième sous réseau (TN2) partiel.

7. Sous-station, pour un réseau de distribution d'énergie suivant l'une des revendications précédentes,
**caractérisée en ce que**
la sous-station (U2, U3, U4) est conformée de manière à contrôler soi-même, sur une invitation, au moyen d'un signal d'invitation, à alimenter un réseau (TN1, TN2) partiel ou une section (TA1, TA2, TA) partielle de celui-ci, alimenté auparavant par une autre sous-station (U1, U2), si des ressources suffisantes pour l'alimentation de ce réseau partiel ou de cette section partielle sont à disposition et, si les ressources sont suffisantes, à faire débuter, par fermeture d'au moins un interrupteur (S4) ouvert, s'il n'y a pas de défaut, l'alimentation en énergie de ce réseau (TN1, TN2) partiel ou de cette section (TA1, TA2, TA) partielle.

8. Sous-station suivant la revendication 7,
**caractérisée en ce que**
- la sous-station (U1 à U4) a un dispositif (K) de communication, par lequel elle peut établir une liaison de communication avec l'autre sous-station (U1 à U4), et
- la sous-station (U1 à U4) a un dispositif (R) d'ordinateur, qui est relié à son dispositif (K) de communication et qui est programmé, de manière à contrôler, sur l'invitation de l'autre sous-station, si des ressources suffisantes pour l'alimentation du réseau (TN1 à TN4) partiel ou de la section partielle sont à disposition et, si les ressources sont suffisantes, à produire au moins un signal de commande, qui déclenche une inversion d'au moins un interrupteur et ainsi une alimentation en énergie de ce réseau partiel ou de cette section partielle.

9. Procédé pour faire fonctionner un réseau (10) de distribution d'énergie, dans lequel une première sous-station (U1) alimente en énergie un premier réseau (TN1) partiel du réseau (10) de distribution d'énergie et une deuxième sous-station (U2, U4) alimente en énergie un deuxième réseau (TN2, TN4) partiel du réseau (10) de distribution d'énergie,
**caractérisé en ce que**
- on sépare, l'un de l'autre, le premier et le deuxième réseaux (TN1, TN2) partiels, s'il n'y a pas de défaut, par au moins un interrupteur (S4),
- dans le cas d'une sous alimentation, du premier réseau (TN1) partiel ou d'une section (TA1, TA2) partielle de celui-ci, la première sous-station (U1) produit un signal (A1) de demande, par lequel d'autres sous-stations (U2, U4) du réseau de distribution d'énergie, notamment au moins également la deuxième sous-station (U2), sont invitées à alimenter en énergie, à l'avenir, le premier réseau (TN1) partiel ou une section (TA1) partielle de celui-ci, alimenté auparavant par la première sous-station (U1),
- la deuxième sous-station (U2) contrôle, si des ressources suffisantes pour l'alimentation du premier réseau (TN1) partiel ou d'une section (TA1) partielle du premier réseau partiel sont à disposition, et
- la deuxième sous-station (U2) relie, entre eux, si les ressources sont suffisantes, le premier et le deuxième réseaux (TN1, TN2) partiels, par le au moins un interrupteur ( S4 ), et fait débuter l'alimentation en énergie du premier réseau (TN1) partiel ou d'une section (TA1, TA2) partielle du premier réseau (TN1) partiel.

10. Procédé suivant la revendication 9,
**caractérisé en ce que**
la deuxième sous-station (U2) reçoit, de la première sous-station (U1) ou d'une unité (Z) centrale, des données (LT) de charge et/ou de topologie, qui se rapportent au premier réseau (TN1) partiel ou à sa section (TA1) partielle, qui doit être alimenté, au lieu de l'être par la première sous-station (U1), ensuite par la deuxième sous-station (U2) et tire parti de ces données (LT) de charge et/ou de topologie, lors du contrôle du point de savoir si des ressources suffisantes pour l'alimentation du premier réseau (TN1) partiel ou de sa section (TA1) partielle sont à disposition.
